# EUROPÄISCHE PATENTSCHRIFT

(11) **EP 1 455 163 B1**
(45) Veröffentlichungstag und Bekanntmachung des Hinweises auf die Patenterteilung: **16.09.2009**
(21) Anmeldenummer: 04100726.1
(22) Anmeldetag: 25.02.2004
(51) Int. Cl.: G01C 21/36, G06F 17/30, G06F 3/048

(54) **Verfahren zur Eingabe von Zielen in ein Navigationssystem**
Method for input of destinations in a navigation system
Procédé d'entrée de destinations dans un système de navigation

(30) Priorität: 07.03.2003 DE 10309948
(43) Veröffentlichungstag der Anmeldung: 08.09.2004
(73) Patentinhaber: ROBERT BOSCH GMBH, 70442 Stuttgart (DE)
(72) Erfinder: Barkowski, Andre, 38228, Salzgitter (DE); Heinemann, Andreas, 31180, Giesen (DE); Kunitz, Katja, 31188, Holle (DE)

(56) Entgegenhaltungen:
- EP-A2- 0 905 662
- EP-A2- 1 197 951
- DE-A1- 19 933 524
- DE-C1- 19 709 518
- US-A- 4 468 756

## Beschreibung

Die Erfindung betrifft ein Verfahren zur Eingabe von Zielen in ein Navigationssystem, insbesondere für Kraftfahrzeuge, bei dem das eingegebene Ziel mit in einer Zieldatenbank abgelegten Zielobjekten verglichen und ein oder mehrere Zielobjekte aus der Zieldatenbank ausgewählt oder zur Bestätigung durch den Nutzer ausgegeben werden.

Bei den vorliegenden Navigationssystemen erfolgt eine Zieleingabe durch manuelles Buchstabieren des Namens eines Zieles bzw. durch Auswahl eines Zieles durch Listen, die auf einem Display angezeigt werden. Das Navigationssystem greift dabei auf eine Zieldatenbank zurück, wobei die Zielobjekte dieser Datenbank durch Namen bzw. geographische Positionen eindeutig charakterisiert sind.

Bisherige Konzepte zur Auswahl eines Zielobjektes aus einer Zieldatenbank beruhen darauf, dass der Anwender die exakte Schreibweise der Namen kennt, über die ein Zielobjekt in einer Datenbank identifiziert wird. Übliche Mittel zur Unterstützung des Anwenders bei der Eingabe von Namen sind die Ausdünnung des Alphabetes mit der Automatic Speller Function (ASF) und die Anzeige von Zielobjekten in lexikographischer Ordnung.

Bei der Ausdünnung des Alphabetes mit der ASF wird die Auswahl der jeweils folgenden Buchstaben so eingeschränkt, dass beim Buchstabieren eines Namens nur sinnvolle Buchstabenfolgen eingegeben werden können. Sinnvoll sind Namen dann, wenn sie in der Zieldatenbank in der entsprechenden Kategorie vorhanden sind.

### Beispiel:

Zur bisher eingegebenen Buchstabenfolge HILB werden nur die Buchstaben E und R zur Fortsetzung der Eingabe angeboten, wenn in der Datenbank nur die folgenden Namen mit dem Wortanfang HILB existieren:
HILB
HILBECK
HILBENHOF
HILBERATH
HILBERSDORF
HILBERTSHAUSEN
HILBRINGEN.

Bei der Anzeige von Elementen in lexikographischer Ordnung wird die bisher eingegebene Buchstabenfolge dazu verwendet, dem Anwender eine Liste der bezüglich der lexikographischen Ordnung vorangehenden oder nachfolgenden Namen anzuzeigen.

### Beispiel:

Lautet die eingegebene Buchstabenfolge HLDF, kann aus einer folgenden Namensliste ein Ziel ausgewählt werden:
HILDESHEIM
HILDESHEIMER WALD
HILDFELD
HILDMANNSFELD:

Die beschriebenen Verfahren und die Unterstützungsmittel funktionieren nur eingeschränkt oder versagen, wenn der Benutzer die Schreibweise eines Namens nicht kennt oder bei der Eingabe einen Schreibfehler begeht. Möchte der Anwender z. B. "AHRBERGEN" eingeben, gibt aber anfangs versehentlich "AR" ein, kann mit ASF das Wort zu "ARBERG" erweitert werden. Danach wird dem Anwender das Wort "AHRBERGEN" in keiner Liste angezeigt, da es in der lexikographisch sortierten Namensliste zu weit von ARBERG entfernt ist.

Aus der DE 197 095 18 C1 ist ein Verfahren und eine Vorrichtung zur Spracheingabe einer Zieladresse in ein Zielführungssystem im Echtzeitbetrieb bekannt. Hierbei werden eingegebene Sprachäußerungen eines Benutzers mittels einer Spracherkennungseinrichtung erkannt und gemäß ihrer Erkennungswahrscheinlichkeit klassifiziert. Diejenige Sprachäußerung mit der größten Erkennungswahrscheinlichkeit wird als die eingegebene Sprachäußerung identifiziert. Für den Fall dass eine Ganzworteingabe eines Fahrziels keinen Erfolg hat, kann ein Fahrziel auch über die Spracheingabe buchstabiert werden.

Aus der EP 119 79 51 A2 wird für den Fall, dass ein homophones Fahrziel eingegeben wird ein Abfrageschritt durchgeführt, gemäß dem ein Benutzer aus den homophonen Fahrzielen ein Fahrziel auswählen kann.

Aus der US 4 468 756 ist ein Spracheingabesystem bekannt, bei dem homonyme Wörter in einem gesonderten Datensatz für die Sprachverarbeitung abgelegt werden.

Aus der DE 199 33 524 A1 ist ein Verfahren zur Eingabe von Daten in ein System bekannt, bei dem auf eine Eingabe eines Benutzers hin ein oder mehrere zu dieser Eingabe möglichst genau passende Begriffe als erkannte Begriffe ermittelt werden, wobei zu jedem dieser genannten Begriffe ein Zuverlässigkeitswert festgestellt wird und wobei die einer Eingabe zugeordneten Begriffe unter Berücksichtigung ihrer Zuverlässigkeitswerte behandelt werden.

Aus der EP 0 905 662 A2 ist ein Eingabesystem wenigstens für Orts- und/oder Straßennamen bekannt, wobei eine Eingabe über Buchstabieren erfolgen kann, wobei das Buchstabieren der Auswahl eines Menüpunktes "Ok" abgebrochen werden kann. Danach wird überprüft, ob die vorgenommene Eingabe sich auf einer CD-ROM eindeutig finden lässt. Bei einer mehrdeutigen Eingabe wird eine Aufstellung von Ortsnamen eingeblendet, aus welchen der gewünschte Ortsname ausgewählt werden kann.

Aufgabe der Erfindung ist es, ein Verfahren bereitzustellen, mit dem die Eingabe eines Zieles in ein Navigationssystem erleichtert wird.

Erfindungsgemäß werden diese Aufgaben durch ein Verfahren mit den Merkmalen des Anspruchs 1 gelöst. Vorteilhafte Weiterbildungen und Ausgestaltungen der Erfindung sind in den Unteransprüchen beschrieben.

Dadurch, dass aus der Zieldatenbank nicht nur Zielobjekte ausgewählt und ausgegeben werden, die mit dem eingegebenen Ziel identisch sind, sondern auch zu dem eingegebenen Ziel ähnliche Zielobjekte, wird die Eingabe von Zielen in ein Navigationssystem wesentlich erleichtert, da dieses Verfahren typische Schreibfehler wie Buchstabendreher, Tippfehler, Auslassungen oder Schreibweise, die der Aussprache folgt anstatt der richtigen Schreibweise abfangen und die gesuchten Zielobjekte trotz unrichtiger Zieleingabe anzeigen.

Die Zieleingabe erfolgt mechanisch, wobei die Buchstaben entweder über eine Tastatur eingegeben werden oder mittels eines Wahlschalters gekennzeichnet und aktiviert werden können. Als Ziel wird eine Beschreibung eines geographischen Ortes bezeichnet, die aus einer Menge von kategorisierten Namen und/oder aus geographischen Angaben besteht. Kategorien von Namen sind z. B. Ortsnamen, Straßennamen oder Hausnummern. Der Begriff "Name" wird im folgenden variabel für ein Element einer solchen Kategorie benutzt.

Bei der manuellen Eingabe wird unter Buchstabieren die Eingabe von Buchstabenfolgen verstanden.

Erfindungsgemäß werden bei einer mechanischen oder haptischen Eingabe von Zielen Zielobjekte mit einer bestimmten Anzahl abweichender bzw. übereinstimmender Buchstaben ausgewählt und ausgegeben, so dass in einem bestimmten Abweichungsbereich aus der Datenbank Zielobjekte ausgewählt werden, die aufgrund der Anzahl an übereinstimmenden Buchstaben als ähnlich betrachtet werden. Ähnlich sind zwei Wörter, wenn sie bis auf wenige Schreibfehler gleich sind.

Eine Weiterbildung der Erfindung sieht vor, dass die Zieleingabe mehrstufig unter Auswahl verschiedener Kategorien erfolgt, denen Zielobjekte zugeordnet sind. Die Zieleingabe kann somit durch die Eingabe von Namen mit bekannter Kategorie oder eines kompletten Zieles ohne Angabe von Kategorien manuell erfolgen, wobei als Kategorien Länder, Ortsnamen, Straßennamen oder markante Punkte vorgesehen sind. Als ein Beispiel für die Eingabe einer Kreuzung mit Angabe von Kategorien könnten folgenden Schritte durchlaufen werden:
(1) Auswahl der Kategorie "Stadt"
(2) Eingabe des Namens "Hildesheim"
(3) Auswahl der Kategorie "Straßenname"
(4) Eingabe des Namens "B1"
(5) Eingabe der Kategorie "Kreuzungseingabe"
(6) Eingabe des Namens "Kennedydamm".

Bei der Eingabe eines Zieles ohne Angabe von Kategorien gibt der Benutzer bei der Eingabe der Zielbeschreibung nicht an, zu welchen Kategorien die von ihm eingegebenen Namen gehören. Die Zuordnung der Informationen zu den einzelnen Kategorien erfolgt durch das Navigationssystem. Ein Beispiel für eine solche Eingabe ist:
(1) Eingabe des Namens "Hildesheim"
(2) Eingabe des Namens "B1"
(3) Eingabe des Namens "Kenedidam".

Die Zielbeschreibung bei einer manuellen Eingabe ohne Angabe von Kategorien umfasst die Namen "Hildesheim", "B1" und "Kenedidam". Bei einem Vergleich der drei Namen mit der Städteliste in der Zieldatenbank wird nur zum Namen "Hildesheim" ein ähnlicher bzw. identischer Eintrag gefunden. Das System würde die Hypothese aufstellen, dass die Stadt "Hildesheim" der Zielort ist. Die Hypothese würde dadurch erhärtet, dass in der Straßenliste der Stadt Hildesheim sowohl zu "B1" als auch zu "Kenedidam" ein ähnlicher Eintrag existiert ("B1" bzw. "Kennedydamm").

Um einen möglichst schnellen Zugriff auf die Zielobjekte in der Zieldatenbank zu haben, werden die Zielobjekte unter Anwendung einer Zuordnungsfunktion einer Klasse zugeordnet, in der einander ähnliche Zielobjekte zusammengefasst werden. Wie aus den oben stehenden Ausführungen zu entnehmen ist, sind Ähnlichkeiten abhängig von der Art der Eingabe oder der Kategorie. Es erfolgt eine anwenderspezifische Zuordnung der Zielobjekte zu den jeweiligen Klassen, in der einander ähnliche Zielobjekte zusammengefasst sind.

Das oben erläuterte Verfahren zur Eingabe von Zielen kann dergestalt verallgemeinert werden, dass die Zielobjekte, die nicht notwendigerweise geographische Angaben sein müssen, sondern gesuchte Objekte einer Datenbank sein können, entsprechend strukturiert werden, so dass sie leichter auffindbar sind. Dabei werden die Zielobjekte unter Anwendung einer Zuordnungsfunktion einer Klasse zugeordnet, in der bereits ähnliche Zielobjekte zusammengefasst sind. Den Zielobjekten wird über die Zuordnungsfunktion ein numerischer Wert zugeordnet, der die Ähnlichkeit zweier Zielobjekte beschreibt. Auf diese Weise können Daten derart strukturiert werden, dass eine Applikation in einem Endgerät aus einer Eingabe in möglichst kurzer Zeit die Ergebnisobjekte zusammenstellen kann. Um die Funktionalität auch bei sehr großen Objektmengen gewährleisten zu können, wird eine Strukturierung beschrieben, mit deren Hilfe aus der zugrundeliegenden Datenmenge eine sehr viel kleinere Teilmenge extrahiert und zur Generierung der Funktionalität bearbeitet werden kann. Die Systemreaktionszeit bei der Verwendung der strukturierten Daten liegt unterhalb einer linearen Abhängigkeit von dem zugrundeliegenden Datenvolumen.

Bei einem Navigationssystem wird zunächst die Kategorie des Namens durch das System abgefragt. Der Benutzer gibt einen Namen manuell Buchstabe für Buchstabe ein, wobei die bisher eingegebene Buchstabenfolge von Anfang an für eine ähnlichkeitsbasierte Suche verwendet wird. Nach jeder Eingabe eines Buchstabens wird dem Benutzer eine Liste der Namen angezeigt, die der eingegebenen Buchstabenfolge am ähnlichsten sind. Je mehr Buchstaben eingegeben werden, desto stärker entspricht die angezeigte Liste dem Ähnlichkeitsempfinden des Benutzers.

Bei einer Kombination aus exakter und ähnlichkeitsbasierter Eingabe für das Buchstabieren wird zunächst die Kategorie des Namens durch das System abgefragt. Führt nach der manuellen Eingabe einer Buchstabenfolge eine Suche nach exakter Übereinstimmung nicht zum Erfolg, so wird die eingegebene Buchstabenfolge als Startwert für eine ähnlichkeitsbasierte Eingabe verwendet. Dieses Verfahren ist insbesondere als Ergänzung und Erweiterung zur Buchstabenausdünnung mit ASF sinnvoll.

Sofern keine Angabe von Kategorien vorgesehen ist, kann eine ähnlichkeitsbasierte Eingabe eines Ziels ohne Angabe von Kategorien auch für das Buchstabieren verwendet werden. Die Zieleingabe kann auch über eine externe Schnittstelle in das Navigationssystem importiert werden, wobei die Zieleingabe auch unvollständig sein darf. Das Navigationssystem nutzt die Methode der Ähnlichkeitssuche, um aus der Zieldatenbank diejenigen Einträge zu finden, die der eingegebenen Zielbeschreibung am ähnlichsten sind. Nach der Eingabe oder dem Import der Zielbeschreibung ohne Kategorieangabe wird nach dem ähnlichen Ziel in der Zieldatenbank gesucht. Nach der Suche kann ein explizites Suchergebnis vom Navigationssystem automatisch zur Weiterverarbeitung verwendet werden, z. B. zur Zielführung.

Alternativ kann dem Benutzer eine Liste verschiedener ähnlicher Elemente der Zieldatenbank zur Auswahl, zur Weiterverarbeitung oder zur Ablehnung angeboten werden. Wenn das ähnlichste Element eine Mindestähnlichkeit zur Eingabe erfüllt, kann das Suchergebnis automatisch zur Weiterverarbeitung verwendet werden, anderenfalls kann das zweite Verfahren eingeleitet werden, bei dem eine Auswahl zur Weiterverarbeitung oder Ablehnung angeboten wird.

## Patentansprüche

1. Verfahren zur Eingabe von Zielen in ein Navigationssystem, insbesondere für Kraftfahrzeuge, bei dem das eingegebene Ziel mit in einer Zieldatenbank abgelegten Zielobjekten verglichen und ein oder mehrere Zielobjekte aus der Zieldatenbank ausgewählt und/oder zur Bestätigung durch den Nutzer ausgegeben werden, wobei die Zielobjekte in der Zieldatenbank durch Ihre Namen eindeutig charakterisiert sind, wobei aus der Zieldatenbank auch dem eingegebenen Ziel ähnliche Zielobjekte ausgewählt und ausgegeben werden, wobei zwei Zielobjekte dann ähnlich sind, wenn die Namen der Zielobjekte bis auf wenige Schreibfehler gleich sind, wobei die Zieleingabe über Buchstabieren erfolgt, indem manuell eine Buchstabenfolge entweder über eine Tastatur eingegeben wird oder über eine Kennzeichnung und eine Aktivierung von Buchstaben mittels eines Wahlschalters eingegeben wird, **dadurch gekennzeichnet, dass** ein Name eines Zielobjekts manuell Buchstabe für Buchstabe eingegeben wird, wobei die bisher eingegebene Buchstabenfolge von Anfang der Eingabe an für eine ähnlichkeitsbasierte Suche derart verwendet wird, dass nach jeder Eingabe eines Buchstabens dem Benutzer eine Liste von Namen von Zielobjekten angezeigt wird, die zu der bisher eingegebenen Buchstabenfolge ähnlich sind.

2. Verfahren nach Anspruch 1, **dadurch gekennzeichnet, dass** die Zieleingabe mehrstufig unter Auswahl verschiedener Kategorien erfolgt, denen Zielobjekte zugeordnet sind.

3. Verfahren nach Anspruch 2, **dadurch gekennzeichnet, dass** die Kategorien Länder, Ortsnamen, Straßennamen oder markante Punkte umfassen.

## Claims

1. Method for the input of destinations into a navigation system, particularly for motor vehicles, in which the input destination is compared with destination objects stored in a destination database, and one or more destination objects is/are selected from the destination database and/or output for confirmation by the user, wherein the destination objects in the destination database are explicitly **characterized by** their names, wherein destination objects which are similar to the input destination are also selected from the destination database and output, wherein two destination objects are similar if the names of the destination objects are the same apart from a few typing errors, wherein the destination is input by spelling it either by manually inputting a letter sequence using a keypad or by using a selector switch to input it by means of identification and activation of letters, **characterized in that** a name for a destination object is input manually letter by letter, with the previously input letter sequence being used for a similarity-based search from the start of the input onwards such that whenever a letter has been input a list of names of destination objects which are similar to the previously input letter sequence is displayed to the user.

2. Method according to Claim 1, **characterized in that** the destination is input in a plurality of stages by selecting various categories which have associated destination objects.

3. Method according to Claim 2, **characterized in that** the categories comprise countries, place names, road names or landmarks.

## Revendications

1. Procédé d'introduction de destinations dans un système de navigation, en particulier prévu pour véhicules automobiles, dans lequel la destination introduite est comparée à des objets cibles conservés dans une base de données de destinations et un ou plusieurs objets cibles sont sélectionnés dans la base de données de destinations et/ou sont présentés en vue d'être confirmés par l'utilisateur, les objets cibles de la base de données de destinations étant **caractérisés** de manière univoque par leur nom,
des objets cibles similaires à la destination introduite étant également sélectionnés dans la banque de données de destinations et présentés,
deux objets cibles étant similaires si les noms des objets-cibles sont identiques à l'exception de certaines erreurs d'écriture, l'introduction de la destination s'effectuant par écriture des caractères en introduisant une succession de caractères manuellement ou par l'intermédiaire d'un clavier ou par une caractérisation et une activation de caractères au moyen d'un commutateur de sélection,
**caractérisé en ce que**
le nom d'un objet cible est introduit manuellement caractère par caractère, la succession déjà introduite des caractères depuis le début de l'introduction étant utilisée pour une recherche de similitude de telle sorte qu'après l'introduction de chaque caractère, une liste de noms d'objets cibles qui sont similaires à la succession de caractères déjà introduite est présentée à l'utilisateur.

2. Procédé selon la revendication 1, **caractérisé en ce que** l'introduction de la destination s'effectue en plusieurs étapes par sélection de différentes catégories associées aux objets cibles.

3. Procédé selon la revendication 2, **caractérisé en ce que** les catégories sont des pays, des noms de lieu, des noms de rue ou des points marquants.
